(19) Europäisches Patentamt
European Patent Office
Office européen des brevets

(11) **EP 3 955 269 A1**

(12) **EUROPÄISCHE PATENTANMELDUNG**

(43) Veröffentlichungstag:
**16.02.2022 Patentblatt 2022/07**

(21) Anmeldenummer: **21198085.9**

(22) Anmeldetag: **19.10.2014**

(51) Internationale Patentklassifikation (IPC):
**H01F 7/122** (2006.01)   **H01F 7/16** (2006.01)
**H01H 33/666** (2006.01)

(52) Gemeinsame Patentklassifikation (CPC):
**H01F 7/1646; H01F 7/122; H01F 7/1615;**
**H01H 50/20;** H01H 33/6662; H01H 2051/2218

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **23.10.2013   DE 102013017508
05.04.2014   DE 102014004888
01.06.2014   DE 102014007771
22.09.2014   DE 102014013723**

(62) Dokumentnummer(n) der früheren Anmeldung(en)
nach Art. 76 EPÜ:
**14820732.7 / 3 061 104**

(71) Anmelder: **Rhefor GbR
12203 Berlin (DE)**

(72) Erfinder: **MECKLENBURG, Arno
10999 Berlin (DE)**

(74) Vertreter: **Behr, Wolfgang
Lorenz Seidler Gossel
Rechtsanwälte Patentanwälte
Partnerschaft mbB
Widenmayerstraße 23
80538 München (DE)**

Bemerkungen:
Diese Anmeldung ist am 21.09.2021 als
Teilanmeldung zu der unter INID-Code 62 erwähnten
Anmeldung eingereicht worden.

(54) **UMKEHRHUBMAGNET**

(57) Permanentmagnetisch polarisierter Umkehrhubmagnet, der eine erste und eine zweite Hubendlage aufweist sowie mindestens einen Anker, gekennzeichnet dadurch, dass er ein Federsystem aufweist oder an einem solchen betrieben wird, welches in jeder der beiden Hubendlagen auf den oder die Anker eine Kraft in Richtung der Hubmittellage ausübt. Erfindungsgemäß sind Federsystem und Umkehrhubmagnet so aufeinander abgestimmt, dass der oder die Anker in beiden Hubendlagen entgegen der Federkraft permanentmagnetisch gehalten werden können. Vorzugsweise ist das Federsystem so auszugestalten, dass die darin durch Bewegen des oder der Anker in seine/ihre Hubendlagen (elastisch) gespeicherte potentielle Energie in beiden Hubendlagen möglichst gleich groß ist. Sind äußere, durch die Anwendung bedingt Rückstellkräfte gegeben, so sind diese bei der Auslegung des Federsystems entsprechend zu berücksichtigen.

Fig. 1a

EP 3 955 269 A1

Fig. 1b

**Beschreibung**

TECHNISCHES GEBIET

Die vorliegende Erfindung betrifft das Gebiet der elektromechanischen Aktoren, beispielsweise einen Umkehrhubmagnet.

HINTERGRUND

Umkehrhubmagnete sind allgemein bekannt und Stand der Technik. Zum Beispiel werden bistabile Ausführungen zum Antrieb elektrischer Mittelspannungsschaltgeräte genutzt, wobei zur Stromversorgung der Magnete Elektrolytkondensatoren gebraucht werden. Weitere Anwendungsfelder finden sich beispielsweise in Magnetventilen, die leistungslos einen Zustand gegen eine Rückstellkraft halten können sollen. Daneben finden sich vielzählige weitere Anwendungen, unter anderem in Sortier- und Förderanlagen, aber auch im Automotive-Bereich (insb. Getriebetechnik, Zentralverriegelungen, Schaltsperren) sowie in Strickmaschinen. Wichtige mögliche Einsatzgebiete sind auch im Bereich der sogenannten Heißkanaltechnik gegeben (betätigen der Nadeln von Spritzgießwerkzeugen) und im Bereich der Roboter-Schweißzangen (nachführen der Schweißelektroden, wobei der erforderliche Spielausgleich durch Federn gewährleistet werden kann).

Ein Nachteil bekannter Umkehrhubmagnete, der häufig einen Einsatz derselben anstelle pneumatischer oder hydraulischer Antriebe (oder kraftschlüssig verriegelter Federspeicher) ausschließt, ist deren oftmals geringer elektrischen Wirkungsgrad. Dieser führt in Mittelspannungsschaltgeräten mit (bistabilen) Umkehrhubmagneten zu erheblichen Kosten, in erster Linie bedingt durch die teuren Elektrolytkondensatoren. In anderen Bereichen der Technik, insbesondere bei Ventilen in Motoren -zum Beispiel Gasventilen in großen Gasmotoren- führt der geringe elektrische Wirkungsgrad zu einer unerwünschten Begrenzung der zulässigen Schaltfrequenz bzw. -häufigkeit durch die in den Spulen auftretende Verlustleistung (die Spulen würden bei höheren Schaltfrequenzen thermisch zerstört werden).

Ein weiterer Nachteil bekannter Umkehrhubmagnete besteht in deren geringer Dynamik, da insbesondere bei vergleichsweise langhubigen Antrieben (langhubig im Vergleich zum Magnetdurchmesser) oftmals nur eine geringe Anfangskraft zur Verfügung steht und außerdem verhältnismäßig große Totzeiten unvermeidlich sind. So sollen Leistungsschalter Kurzschlüsse schnellstmöglich vom Netz trennen oder beim Ausschalten den Nulldurchgang des Stromes treffen oder beim Einschalten den der Spannung; hierzu ist eine hohe Dynamik bei kurzen Totzeiten erforderlich - dies gelingt mit herkömmlichen Umkehrhubmagneten nur mangelhaft.

Schließlich ist ein Nachteil bekannter bistabiler Umkehrhubmagnete darin zu sehen, dass diese tendenziell die höchste Ankergeschwindigkeit aufweisen, wenn der Anker zum Ende eines Stellvorganges eine Hubendlage erreicht. Dies führt zu einem hohen Aufwand für die Endlagendämpfung oder begrenzt die Lebensdauer des Magneten.

In manchen Anwendungen, vor allem in Ventilen und elektrischen Schaltgeräten, sollen Umkehrhubmagnete monostabil sein statt bistabil um ggf. leistungslos eine sichere Endlage einnehmen zu können.

Die der Erfindung zugrunde liegende Aufgabe liegt also darin, den elektrischen Wirkungsgrad polarisierter Umkehrhubmagnete, insbesondere bistabiler, zu erhöhen. Des Weiteren sollen die neuen Magnete eine, verglichen mit bekannten Umkehrhubmagneten, hohe Dynamik bei verringerten Totzeiten aufweisen können. Außerdem ist eine allgemeine Forderungen an Aktuatoren eine kompakte Bauweise.

ZUSAMMENFASSUNG DER ERFINDUNG

Die genannte Aufgabe wird durch einen Antrieb gemäß einem der unabhängigen Ansprüche gelöst. Unterschiedliche ausführungsformen, Weiterentwicklungen und Anwendungen sind Gegenstand er abhängigen Ansprüche. Gemäß einem Beispiel der Erfindung weist der permanentmagnetisch polarisierte Umkehrhubmagnet ein Federsystem auf, welches auf den Anker in beiden Hubendlagen eine in Bewegungsrichtung zur Hubmittellage (d.h. zur Mitte zwischen den beiden Hubendlagen) hin gerichtete Kraft ausübt. Dabei ist das Federsystem so auszulegen, dass in mindestens einer Hubendlage die Federkraft betragsmäßig kleiner ist als die auf den Anker wirkende Gesamt-Reluktanzkraft im statischen, unbestromten Fall, sodass der Anker entgegen der Federkraft permanentmagnetisch in mindestens einer Endlage stabil gehalten werden kann.

Als Federsystem kommen nicht nur solche mit mechanischen Federn in Betracht sondern auch magnetische oder pneumatische. Entscheidend ist, dass in beiden Hubendlagen eine in Richtung der Hubmittellage, welche zwischen beiden Hubendlagen liegt, wirkende Kraft auf den Anker bzw. das Ankersystem übertragen werden kann. Für bistabile Magnete ist das Federsystem so auszugestalten, dass die im Federsystem gespeicherte potentielle Energie in beiden Hubendlagen möglichst gleich groß ist. Die Federkraft muss in beiden Hubendlagen betragsmäßig kleiner sein als die zugehörige Reluktanzkraft im statischen, unbestromten Fall. Sofern die Anwendung, welche vom Umkehrhubmagneten gestellt werden soll, selbst eine Rückstellkraft erzeugt, so ist diese bei der Auslegung des Federsystems entsprechend zu berücksichtigen. Dies ist zum Beispiel in Vakuumleistungsschaltern der Fall, deren Kontaktandruckfedern hier als Teil des Federsystems aufzufassen sind.

Die erfindungsgemäßen Antriebe sollen so ausgestaltet werden können, dass sie, bezogen auf ihr Volumen, größere Kräfte erzeugen können (als bekannte Umkehrhubmagnete). Letztlich soll der Antrieb auch monostabil ausgeführt werden können und dennoch kurze Stellzeiten und hohe Wirkungsgrade aufweisen können.

KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigen:

Figur 1a     ein annähernd maßstabsgetreuer Schnitt parallel zur Bewegungsrichtung und in der Spiegelebene eines Antriebs in einer Ausführung mit zwei Ankern bzw. Ankerplatten gemäß einem Beispiel der Erfindung;

Figur 1b     ein Schnitt senkrecht zur Bewegungsrichtung durch die Luftspalte 10-14 des Antriebs gemäß Fig. 1a;

Figur 2a-e   anhand schematischer Darstellungen verschiedene Beispiele von unterschiedlichen Bauweisen eines erfindungsgemäßen Antriebs;

Figur 3      einen Längsschnitt durch einen Antrieb gemäß einem Beispiel der Erfindung zur Veranschaulichung des magnetischen Prinzips, welches dem Antrieb zugrunde liegt;

Figur 4      ein weiteres, rotationssymmetrisches Ausführungsbeispiel eines Antriebs gemäß der vorliegenden Erfindung;

Figur 5      eine schematische Darstellung des Magnetkreises eines Antriebs gemäß einem weiteren Beispiel der Erfindung; und

Figur 6      eine weiteres Ausführungsbeispiel, bei dem der Antrieb eine begrenzte Rotationsbewegung ausführt.

DETAILLIERTE BESCHREIBUNG DER AUSFÜHRUNGSBEISPIELE

Nachfolgend wird die Erfindung zuerst am Beispiel bistabiler Umkehrhubmagnete erläutert. Infolge des Federsystems setzt der Anker sich aus jeder Hubendlage in Richtung der Hubmittellage in Bewegung, sobald infolge einer elektrischen Gegenerregung die Haltekraft (Die Haltekraft ist definiert als Gesamt-Reluktanzkraft auf den Anker in der jeweiligen Hubendlage) betragsmäßig kleiner wird als die Federkraft. Hierzu ist eine weitaus geringere elektrische Leistung erforderlich als bei konventionellen bistabilen Umkehrhubmagneten ohne Federsystem, auch kann die zugehörige (externe) Kraftanstiegsrate weitaus höher sein. Beispielsweise gilt in einem herkömmlichen bistabilen Umkehrhubmagneten auch in der Hubanfangslage näherungsweise:

$$F_{ext} = ( F_{Spalt1} + F_{spalt2} ) - F_{Anschlag} = 1/(2*\mu 0)*(A1*B_{Spalt1}^{\wedge}2 + A2* B_{Spalt2}^{\wedge}2) - F_{anschlag}$$

Wobei A1 und A2 die (entgegengesetzten) Polflächen des Ankers sind und $F_{Anschlag}$ eine die Endlagen-Anschläge abbildende Funktion.

Zur Veranschaulichung werde angenommen, dass Luftspalt Spalt2 bis auf einen Restluftspalt geschlossen ist und dieser Restluftspalt einen Fluss mit einer Dichte von 2T führt ($B_{Spalt2}$ = 2T), während Luftspalt Spalt1 voll geöffnet ist und keinen Fluss führt ($B_{Spalt1}$ = 0T). Damit die auf den Anker wirkende Summe der entgegengesetzten Reluktanzkräfte $F_{Spalt1}+F_{Spalt2}$ entlang der axialen Bewegungsrichtung des Ankers das Vorzeichen wechselt, muss unter der Voraussetzung A1 = A2 die Flussdichte in Spalt1 größer werden als die in Spalt2. Hierzu kann eine große elektrische Leistung erforderlich sein, da Spalt1 voll geöffnet ist. In einfachster Näherung ist der zur Erzeugung einer gegebenen Flussdichte im Luftspalt erforderliche Strom der Luftspaltlänge proportional, die zugehörige Verlustleistung geht aber mit dem Strom quadratisch.

Für sehr kleine Hübe kann unter Vernachlässigung von Streufeld und Wirbelströmen (statischer oder quasi-statischer Fall) angenommen werden, dass der in beiden Luftspalten Spalt1 und Spalt2 durch die Gegenerregung erzeugte Flussdichtehub betragsmäßig gleich groß ist. In diesem, für herkömmliche bistabile Umkehrhubmagnete günstigsten Fall wäre im vorliegenden Beispiel ein Flussdichtehub von je 1T erforderlich (Spalt1: 0T -> 1T, Spalt2: 2T->1T) um auch nur die Haltkraft vollständig zu kompensieren.

Nun werde der gleiche Magnet mit einem erfindungsgemäßen Federsystem ausgerüstet, welches in der zuvor beschriebenen Hubanfangslage (Position "0") eine Kraft $F_{Feder}(0)$ in Richtung der Hubmittellage ausübt, die halb so groß sei wie die (Halte-)Kraft. Damit genügt eine Minderung des Flusses in Spalt2 von 2T auf (sqrt(2))T, um die über Spalt2 auf den Anker wirkende Reluktanzkraft gleich groß werden zu lassen wie die Federkraft. Damit steht bereits die über Spalt1 auf den Anker wirkende Reluktanzkraft zur

Beschleunigung des Ankers zur Verfügung; und das bei einem Flussdichtehub (an Spalt2) von lediglich ~0.59T. Wenn, wie im vorangegangenen Beispiel, infolge elektrischer Gegenerregung die Flussdichte in Spalt2 von 2T auf 1T vermindert und in Spalt1 von 0T auf 1T erhöht wird, steht zur Beschleunigung des Ankers in der Hubanfangslage 0 sogar die Hälfte der Federkraft zur Beschleunigung des Ankers zur Verfügung ($F_{Feder}$-$F_{Spalt2}$ bei $B_{Spalt2}$=1T) *zuzüglich* einer Reluktanzkraft $F_{Spalt1}$, welche bei 1T ein Viertel derjenigen Kraft erzeugt, die bei 2T erzeugt werden würde. Unter erneuter Annahme A1 = A2 ist dies eine näherungsweise gleich große Kraft wie die von der Feder erzeugte. Damit kann der Antrieb bei einem Flussdichtehub von 1T (+1T in Spalt1, -1T in Spalt 2) unmittelbar in der Hubanfangslage trotz voll geöffneten Arbeitsluftspalts Spalt1 eine Kraft erzeugen, welche ungefähr der Hälfte der Haltekraft entspricht, entsprechend der eingesetzten Federkraft. In dieser groben Näherung an einem für herkömmliche bistabile Umkehrhubmagnete besonders günstigen Fall zeigt sich bereits, dass erfindungsgemäße Antriebe eine weitaus geringere elektrische Leistung benötigen, um sich in Bewegung zu setzen - wobei der Antrieb vorteilhaft so ausgelegt wird, dass der größte Teil der initial den Anker beschleunigenden Energie dem Federsystem entnommen und nicht etwa elektrisch aufgewendet wird. Es zeigt sich weiter, dass die Ankerbewegung, im Vergleich zu herkömmlichen Magneten, bereits bei weitaus geringeren Flussdichtehüben ermöglicht werden kann, was wiederum kurze Totzeiten ermöglicht (natürlich auf Kosten der effektiven Haltekraft, die sich aus der Summe von Feder- und Reluktanzkräften ergibt).

Wichtig für das Verständnis der Erfindung ist, dass der Anker zunächst überwiegend mit Federkraft beschleunigt werden kann, wozu nur eine verhältnismäßig geringe elektrische Leistungsaufnahme erforderlich ist (zur Gegenerregung). Sich bewegende bzw. beschleunigte elektrische Maschinen können weitaus höhere elektrische Wirkungsgrade aufweisen als solche, die aus der Ruhelage starten. Dies liegt letztlich daran, dass die vom Antrieb verrichtete Arbeit ein Integral der Kraft über den Stellweg ist, die Verlustwärme aber ein Integral der Verlustleistung über die Zeit. Damit ist klar, dass eine Verkürzung der Stellzeit, also eine Verkleinerung des Integrationsintervalls in der Zeit-Domäne, tendenziell zu einer Zunahme des elektrischen Wirkungsgrades führt. Ebenso ist klar, dass ein "Festklemmen" des Ankers in irgendeiner Position zu einem Wirkungsgrad von Null führen muss, da das Arbeitsintegral verschwindet und die Integrationszeit eskaliert.

Ein Aspekt des hier beschriebenen erfindungsgemäßen Beispiels ist also, dass für das Auslösen der Bewegung nur eine geringe Gegenerregung erforderlich ist, die schnell erzeugt werden kann. Ein weiterer Aspekt besteht darin, dass ein symmetrisches Federsystem in Abwesenheit magnetischer Felder und in Abwesenheit von Reibung den Anker zwischen seinen Endlagen binnen einer gewissen Schwingungszeit hin- und herbewegen könnte, ohne dass hierzu überhaupt Energie eingesetzt werden müsste. Zu diesem Zweck muss das Federsystem so ausgelegt werden, dass die darin elastisch gespeicherte (potentielle) Energie in beiden Hubendlagen möglichst gleich groß ist. Bei einem so ausgelegten Federsystem muss lediglich die o.g. Gegenerregung erzeugt und dem Antrieb so viel elektrische Leistung zugeführt werden, dass dieser sich in Bewegung setzen, die Reibung überwinden und ggf. zusätzlich Nutzarbeit verrichtet werden kann. Im Gegensatz dazu muss beim herkömmlichen bistabilen Umkehrhubmagneten zuerst eine wesentlich größere Gegenerregung erzeugt werden, was mit entsprechenden ohmschen Verlusten verbunden ist. Sodann muss der Anker ausschließlich mit Hilfe elektrischer Leistung beschleunigt werden, was vergleichsweise langsam erfolgt und daher ebenfalls energieintensiv ist. Der Magnet muss auch Reibung überwinden und Nutzarbeit verrichten, doch eben mit wiederum geringem Wirkungsgrad, u.a. wegen der langen Stellzeiten durch die üblicherweise geringe Kraft und Kraftanstiegsrate bei Hubbeginn. Zumeist erreicht der herkömmliche bistabile Umkehrhubmagnet seine höchste Ankergeschwindigkeit, wenn der Anker das Hubende trifft. Hierbei wird die dem Anker mitgeteilte kinetische Energie in Wärme, Schall und unvermeidlich auch in die plastische Deformation von Antriebskomponenten umgewandelt. Diese hohe kinetische Energie infolge der hohen Geschwindigkeit beim Auftreffen in die Hubendlage ist einerseits ggf. für den Zweck des Antriebs vergeudet, andererseits bedroht sie dessen Lebensdauer durch starken Verschleiß und macht ggf. eine aufwendige und kostspielige Endlagendämpfung erforderlich. Im Gegensatz dazu wird bei erfindungsgemäßen Antrieben die kinetische Energie des Ankers (und ggf. damit mechanisch verbundener weiterer, z.B. anwendungsseitiger Teile) zu großem Teil wiederum im Federsystem gespeichert ("rekuperiert") und steht damit für einen nächsten Stellvorgang in entgegengesetzter Richtung zur Verfügung (von (Reibungs-)Verlusten abgesehen).

Zusammengefasst müssen erfindungsgemäße Antrieb in der Regel weniger Arbeit verrichten als herkömmliche Umkehrhubmagnete, um in endlicher Zeit von einer Hubendlage in die andere zu fahren. Und infolge der "Vorbeschleunigung" durch das Federsystem können sie diese kleinere erforderliche Arbeit auch noch mit höherem elektrischem Wirkungsgrad verrichten. Dies führt zu entsprechend kleinen Verlustleistungen und ermöglicht höhere Schaltfrequenzen, wo diese bislang durch die Velustleistung bzw. (integral) Verlustwärme begrenzt wurden.

Bei kleinen Hüben, wenn also die Arbeitsluftspalte in guter Näherung als "klein" bzw. "kurz" angenommen werden können, weisen die erfindungsgegenständlichen Antriebe große Vorteile gegenüber herkömmlichen bistabilen Umkehrhubmagneten auf: Die Totzeit der hier beschriebenen Antriebe ist in der Regel geringer, die Stellzeit ist geringer, der Wirkungsgrad ist höher, die Endlagen-Geschwindigkeit wiederum geringer. Zwar weisen die neuartigen Magnete in bistabiler Ausführung infolge des Federsystems im unbestromten Fall jeweils mindestens einen Rastpunkt auf, der keiner Hubendlage entspricht. Die Magnete können aber ohne weiteres so ausgelegt werden, dass der Anker dennoch magnetisch gegen die Rückstellkraft des Federsystems in die angestrebte Hubendlage befördert wird. Beim Betrieb an einer schaltbaren (Konstant-) Spannungsquelle kann der Magnet so ausgelegt sein, dass er bei einem regelmäßigen Stellvorgang infolge Gegeninduktion aus der oder den Spulen seinen Gleichgewichtsstrom bei weitem nicht erreicht. Wird nun infolge des Verhaltens der mechanischen Last, beispielsweise hoher Reibung, der Antrieb in der Umgebung seiner Raststelle "eingefangen", so steigt der Strom und damit, mit gewisser Verzögerung durch Selbstinduktion und Wirbelstromeffekte, die auf den Anker wirkende Reluktanzkraft, welche schließlich immer genügen kann, das Federsystem erneut zu spannen und den Anker in die angestrebte Endlage zu befördern.

Bei langhubigen Antrieben (d.h. der Hub in Längsrichtung ist lang als die Breite des Luftspaltes in Querrichtung), bei denen also die o.g. Näherung des "kleinen Luftspaltes" nicht erfüllt ist, ist dagegen ein Einrasten im Federsystem leichter möglich. Auch zeigt sich hier eine behebbare Schwäche derder langhubigen Ausführung des Antriebs: Die höchste Ankergeschwindigkeit kann, je nach Auslegung des Federsystems und Lastverhalten, im Bereich der Hubmittellage erreicht werden, wenn also die Arbeitsluftspalte des einfachen Ankers weit geöffnet sind. Weit geöffnete Luftspalte führen allerdings zu niedrigen "Kraftkonstanten" (tatsächlich Kraftfunktionen), d.h. ein gegebener Strom erzeugt nur eine geringe Reluktanzkraft. Dies konterkariert den oben beschriebenen Zweck - eben dort, wo mit zusätzlichem Antrieb durch die Federkraft höchste Ankergeschwindigkeiten erreicht werden, wo folglich theoretisch ein hoher elektrischer Wirkungsgrad darstellbar ist, sind die "Kraftkonstanten" am erfindungsgemäßen Antrieb *ohne Kennlinienbeeinflussung* klein, was den Vorteil der Erfindung beeinträchtigen kann.

Erfindungsgemäße Antriebe sind deshalb, falls ihre Hübe derartig groß sind, dass die zugehörigen Arbeitsluftspalte nicht in jedem regelmäßigen Betriebszustand als "klein" genähert werden können, vorteilhaft mit einem Mittel zur Kennlinienbeeinflussung auszurüsten. Handelt es sich bei diesem Mittel um eine geometrische Kennlinienbeeinflussung, so ist diese erfindungsgemäß mit dem Federsystem abzustimmen. Die erfindungsgemäße Kennlinienbeeinflussung kann auch die Reihenreluktanz der Arbeitsluftspalte mindern und damit helfen, die erforderliche Auslöseleistung zu minimieren.

Ein weiterer Nachteil herkömmlicher bistabiler Umkehrhubmagnete ist darin zu sehen, dass sie eine äußere Flussführung aufweisen: Der permanentmagnetisch erzeugte Fluss muss einerseits in den Anker gespeist, andererseits um mindestens eine Spule herum den Polflächen (im Allgemeinen den Stirnflächen) des Ankers zugeführt werden. Dies führt zu einem erhöhten Antriebsquerschnitt.

Soll der erfindungsgemäße Antrieb eine besonders kompakte Bauform aufweisen, so umfasst dieser zwei oder mehr Rahmenteile aus weichmagnetischem Material, zwischen denen permanentmagnetisch eine magnetische Spannung erzeugt wird. Weiterhin umfasst der Antrieb mindestens zwei starr miteinander verbundene weichmagnetische Ankerteile (in der Folge Ankerplatten), nämlich die erste und die zweite Ankerplatte. Erfindungsgemäß weist der Antrieb zwei Hubendlagen auf, nämlich eine erste und eine zweite Hubendlage. Der Antrieb ist so ausgestaltet, dass in einer ersten Hubendlage die erste Ankerplatte die Rahmenteile, bis auf unvermeidliche Restluftspalte, magnetisch kurzschließt, währenddessen die Arbeitsluftspalte an der zweiten Ankerplatte maximal geöffnet sind. In einer zweiten Hubendlage schließt entsprechend die zweite Ankerplatte die Rahmenteile magnetisch kurz und die Arbeitsluftspalte an der ersten Ankerplatte sind maximal geöffnet. Ein zwangsweises Verschieben der starr miteinander verbundenen Ankerteile (hier Ankerplatten) von der ersten Hubendlage in die zweite führt demgemäß dazu, dass der permanentmagnetisch erzeugte Fluss überwiegend von der ersten auf die zweite Ankerplatte kommutiert. (Die Arbeitsluftspalte beider Ankerplatten (zum Rahmen) sind bezüglich des mit Hilfe der Antriebsspule(n) erzeugten magnetischen Flusses mit einander magnetisch in Reihe geschaltet. Bezogen auf den permanentmagnetisch erzeugten Fluss sind die genannten Arbeitsluftspalte der beiden Ankerplatten magnetisch parallel geschaltet.)

Der Gegenstand der vorliegenden Erfindung wird im folgenden noch einmal in Form von Aspekten beschrieben, welche sowohl unabhängig, als auch in Kombination mit der bisherigen und der darauffolgenden Beschreibung die Erfindung definieren:

1. Antrieb mit permanentmagnetisch polarisiertem Umkehrhubmagnet, der eine erste und eine zweite Hubendlage aufweist, eine zwischen den Hubendlagen liegende Hubmittellage sowie mindestens einen Anker,
**dadurch gekennzeichnet, dass** der Antrieb ein Federsystem aufweist oder an einem solchen betrieben wird, welches in jeder der beiden Hubendlagen auf den oder die Anker eine Kraft in Richtung der Hubmittellage ausübt, wobei Federsystem und Umkehrhubmagnet so auf einander abgestimmt sind, dass der oder die Anker in beiden Hubendlagen entgegen der Federkraft permanentmagnetisch gehalten werden können.

2. Antrieb gemäß Aspekt 1, bei dem das Federsystem so ausgestaltet ist, dass die darin durch Bewegen des oder der Anker in seine/ihre Hubendlagen (elastisch) gespeicherte potentielle Energie in beiden Hubendlagen unter Berücksichtigung äußerer, von außen auf das Federsystem wirkenden Rückstellkräfte möglichst gleich groß ist.

3. Antrieb gemäß Aspekt 1, gekennzeichnet dadurch, dass er einen großen (Nenn-)Hub aufweist, also die Länge der voll geöffneten Arbeitsluftspalte nicht wesentlich kleiner ist als deren kleinste Ausdehnung ("Breite") senkrecht zur Luftspaltlänge, und dass der Antrieb eine (konstruktive) geometrische Kennlinienbeeinflussung aufweist. Erfindungsgemäß ist die geometrische Kennlinienbeeinflussung so zu bemessen, dass die magnetische Haltekraft in den Hubendlagen nicht verschwindet sondern wenigstens ein Drittel derjenigen Haltekraft beträgt, die ein ansonsten identischer bistabiler Umkehrhubmagnet ohne Kennlinienbeeinflussung erreichen würde,
wobei die geometrische Kennlinienbeeinflussung vorzugsweise so ausgelegt ist, dass an Nullstellen der Federfunktion des Federsystems bei auslegungsgemäßer Bestromung der Antriebsspule(n) eine Reluktanzkraft erzeugt wird, welche um wenigstens 50% größer ist als die bei einem ansonsten identischen Magneten, auch mit gleicher Bestromung, aber ohne Kennlinienbeeinflussung.

4. Antrieb , umfassend:

- zwei oder mehr weichmagnetische Rahmenteile oder -bereiche;
- einen oder mehrere Permanentmagnete, welche die zwei oder mehr Rahmenteile oder -bereiche gegeneinander unter eine magnetische Spannung setzen, welche einen magnetischen Fluss zur Folge hat;
- einen ersten und einen zweiten weichmagnetischen Ankerteil, die starr miteinander verbunden sind, wobei jedem Ankerteil mindestens ein Arbeitsluftspalt zwischen dem jeweiligen Ankerteil und einem Rahmenteil zugeordnet ist;
- eine erste Hubendlage, in welcher der erste Ankerteil die Rahmenteile magnetisch kurzschließt, während der oder die Arbeitsluftspalte am zweiten Ankerteil maximal geöffnet sind;
- eine zweite Hubendlage, in welcher der zweite Ankerteil die Rahmenteile magnetisch kurzschließt, während der oder die Arbeitsluftspalte am ersten Ankerteil maximal geöffnet sind;
- Mindestens eine Erregerspule zur Erzeugung eines magnetischen Flusses, wobei der Antrieb so gebaut ist, dass eine (erzwungene) Bewegung der Ankerteile, synchronisiert durch deren starre Verbindung, aus der ersten in die zweite Hubendlage bewirkt, dass der permanentmagnetisch erzeugte Fluss großteils von dem ersten auf den zweiten Ankerteil kommutiert und vice versa,

wobei die Erregerspule(n) so angeordnet sind, dass ihre Bestromung den permanentmagnetisch erzeugten Fluss, der den einen Ankerteil durchsetzt, schwächt und den, der den anderen Ankerteil durchsetzt, verstärkt;
wobei die Ankerteile bezüglich des permanentmagnetisch erzeugten Flusses magnetisch parallel, bezüglich des von mindestens einer Spule erzeugten Flusses aber magnetisch in Reihe geschaltet sind.

5. Antrieb gemäß Aspekt 1 oder 4, bei welchem eine oder beide Ankerteile mit dem Rahmen ein Anker-Ankergegenstücksystem zur geometrischen Kennlinienbeeinflussung bilden.

6. Antrieb gemäß Aspekt 1 oder 4 , der als Mittel zur Kennlinienbeeinflussung anstelle und/oder zusätzlich zu einer geometrischen Kennlinienbeeinflussung an dem oder den Ankern bzw. Ankerteilen befestigte Permanentmagnete, Spulen oder Kurzschlusswindungen aufweist.

7. Antrieb gemäß einem der Aspekte 1bis 3 oder 4 bis 6, dadurch gekennzeichnet, dass die Rahmenteile von Blechpaketen oder SMC gebildet werden.

8. Antrieb gemäß einem der Aspekte 1 bis 3 oder 4 bis 7, dadurch gekennzeichnet, dass die Ankerteile als Ankerplatten ausgestaltet sind, die aus Blechpaketen oder SMC gebildet werden.

9. Antrieb gemäß einem der Aspekte 1 bis 3 oder 4 bis 8, dadurch gekennzeichnet, dass die Ankerteile aus massivem weichmagnetischen Werkstoff bestehen, in den Schlitze zur Dämpfung der Wirbelströme eingebracht sind.

10. Antrieb gemäß Aspekt 9, dadurch gekennzeichnet, dass die Ankerteile einen mindestens doppelt so hohen spezifischen elektrischen Widerstand aufweisen wie reines ferritisches Eisen.

11. Antrieb gemäß einem der Aspekte 1 bis 3 oder 4 bis 10, der in Bezug auf eine Rotationsachse näherungsweise rotationssymmetrisch aufgebaut ist und einen einzigen im Pulverspritzgießverfahren hergestellten Rahmen aus einem weichmagnetischen Kompositwerkstoff aufweist, wobei die gegeneinander unter magnetischer Spannung stehenden Rahmenteile infolge lokaler magnetischer Sättigung des einen Rahmens gebildet werden.

12. Antrieb gemäß Aspekt 11, dadurch gekennzeichnet, dass er zwei Ankerteile aufweist, welche durch eine Stange starr miteinander verbunden sind, die entlang der Rotationsachse durch den näherungsweise rotationssymmetrischen Rahmen geführt wird, wobei die Stange vorzugsweise weichmagnetisch ist.

13. Antrieb gemäß Aspekt 12, gekennzeichnet dadurch, dass das Federsystem innerhalb des Rahmens angeordnet ist, beispielsweise mit Spiraldruckfedern, welche die Stange umfassen und direkt oder indirekt am Rahmen widergelagert sind.

14. Nieder- oder Mittelspannungsschalter, insbesondere Vakuumleistungsschalter, der von einem Antrieb gemäß einem der Aspekte 1 bis 13 angetrieben wird.

15. Spritzgusswerkzeug, welches Nadelventile aufweist, die durch einen Antrieb gemäß einem der der Aspekte 1 bis 13 betätigt werden.

16. Spritzgusswerkzeug nach Aspekt 15, dadurch gekennzeichnet, dass es außerdem ein Mittel zum Spielausgleich aufweist, insbesondere einen mit einem Elektromotor angetriebenen Spindelantrieb, der die Position des Antriebs gemäß einem der der Aspekte 1 bis 13 in Richtung von dessen Antriebsachse zu steuern vermag.

17. Roboterschweißzange, die einen Antrieb gemäß einem der der Aspekte 1 bis 13, aufweist, um eine oder mehrere Schweißelektroden zu bewegen, wobei zwischen Antrieb und Schweißelektrode(n) ein Mittel zum Spielausgleich angeordnet ist, beispielsweise eine Feder mit möglichst flacher Kennlinie.

18. Magnetventil für Gase oder Flüssigkeiten oder Schüttgut (bspw. Mehl), das von einem Antrieb gemäß einem der der Aspekte 1 bis 13 angetrieben wird.

19. Magnetventil gemäß Aspekt 18, welches zusätzlich einen monostabilen Elektromagneten mit Rückstellfeder aufweist, welcher bestromt den Antrieb gemäß Aspekt 1 oder 4 freigibt, unbestromt jedoch abfällt und den Antrieb gemäß Aspekt 1 oder 4 blockiert, indem er ihn mit Federkraft sicher in diejenige Hubendlage verschiebt, in welcher das Magnetventil geschlossen ist.

20. Antrieb mit permanentmagnetisch polarisiertem Umkehrhubmagnet, der eine erste und eine zweite Hubendlage aufweist, eine zwischen den Hubendlagen liegende Hubmittellage sowie mindestens einen Anker,

**dadurch gekennzeichnet, dass** der Antrieb ein Federsystem aufweist oder an einem solchen betrieben wird, welches in jeder der beiden Hubendlagen auf den oder die Anker eine Kraft in Richtung der Hubmittellage ausübt, wobei das Federsystem auf den oder die Anker eine Kraftausübt, welche diesen aus beiden Hubendlagen in Richtung der Hubmittellage verschieben kann, diese Kraft aber betragsmäßig nur in einer der beiden Hubendlagen größer ist als die entgegengesetzt wirkende magnetische Haltekraft, sodass der oder die Anker nur in einer der beiden Hubendlagen permanentmagnetisch gehalten werdenkann.

21. Antrieb nach Aspekt 20,
wobei Federsystem und Magnet so auf einander abgestimmt sind, dass die Summe aus der Reluktanzkraft und der Federkraft im stationären, unbestromten Fall und der Federkraft über den gesamten Hub das gleiche Vorzeichen aufweist.

22. Antrieb nach Aspekt 20 oder 21 gekennzeichnet dadurch, dass das Federsystem eine nichtlineare Kennlinie besitzt, und zwar eine auf die stromlos stabile Endlage bezogen progressive, sodass die Federkonstante bei Annäherung des oder der Anker (bzw. des Ankersystem) an diese Endlage kontinuierlich oder diskontinuierlich zunimmt.

23. Pneumatikventil gekennzeichnet dadurch, dass es von einem Antrieb nach einem der Aspekte 1 bis 22 angetrieben wird und das zwischen Ventilteil und Antriebsteil zum Spielausgleich eine Feder aufweist.

24. Getriebeventil mit einem Antrieb gemäß Aspekt 20, 21 oder 22 oder einem Pneumatikventil gemäß Aspekt 23.

25. Antrieb nach einem der Aspekte 1 bis 13, der als bistabiler Drehmagnet ausgebildet ist, dadurch gekennzeichnet, dass er eine begrenzte rotatorische Bewegung ausführt und eine Feder oder ein Federsystem aufweist, wobei die Feder oder das Federsystem ein Drehmoment erzeugt, welches in beiden Hubendlagen betragsmäßig kleiner ist als die zugehörigen magnetischen Haltemomente des Drehmagneten und das in beiden Hubendlagen das entgegengesetzte Vorzeichen aufweist wie die magnetischen Haltemomente.

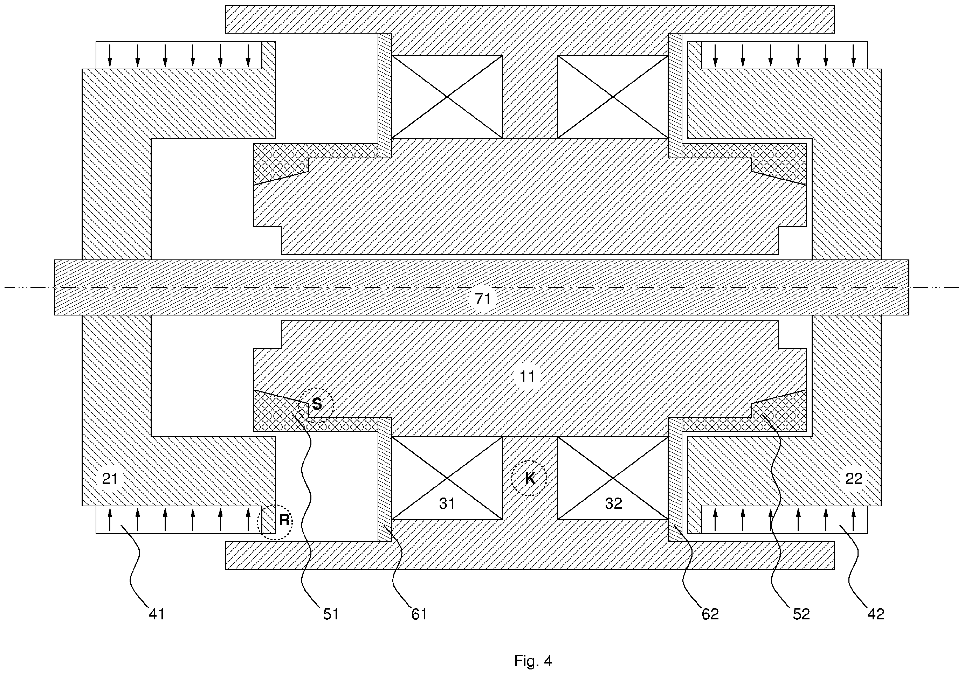

26. Antrieb (vgl. Fig.4) der zumindest einen Anker (21), mindestens einen weichmagnetischen Rahmen (11), mindestens eine Spule (31) sowie mindestens einen Permanentmagneten (41) aufweist, der an dem oder den Ankern befestigt ist,

wobei Rahmen und Anker so ausgebildet sind, dass der durch Bestromen von der (den) Spule(n) (31) erzeugte magnetische Fluss zumindest teilweise den (die) Permanentmagnet(e) (41) durchsetzt, sodass auf diese(n) eine Kraftwirkt, die auf den Anker übertragen wird;

die Anordnung aus Anker, Rahmen und Permanentmagnet(en) ist dabei so beschaffen, dass der von der oder den Spulen (31) erzeugte magnetische Fluss senkrecht zur Polarisationsrichtung des oder der Permanentmagnete während der Hubbewegung zumindest teilweise inhomogen ist, die von der oder den Spulen (31) hervorgerufene und von Permanentmagnet(en) (41) gespürte magnetische Flussdichte also einen Gradienten senkrecht zur Polarisationsrichtung der Permanentmagnete(41) aufweist,

wobei Anker (21) und Rahmen(11) so ausgebildet sind, dass der (oder die) Anker mitsamt dem oder den daran befestigten Permanentmagneten zumindest teilweise in den Rahmen eintauchen kann, wobei die Permanentmagnete vorteilhafterweise nur unvollständig in den Rahmen eintauchen; und

wobei der Anker so ausgestaltet ist, dass dessen zunehmendes Eintauchen in Rahmen (11) während einer Hubbewegung zwar die Reluktanz des Magnetkreises vermindert, den oder die Permanentmagnete aber nicht (vollständig) kurzschließt, und dass der (oder die) Anker sowie der Rahmen geometrisch so ausgestaltet sind, dass zum Ende des Hubes eine Haltekraft auftritt

27. Antrieb nach Aspekt 26 gekennzeichnet dadurch, dass der oder die Anker rotationssymmetrisch ausgeführt wird bzw. werden und dass der oder die Permanentmagnete (21) aus radial oder diametral polarisierten Ringmagneten oder Kreissegment-Magneten besteht bzw. bestehen.

28. Antrieb nach Aspekt 26 oder 27 gekennzeichnet dadurch, dass Stator (11) und Spule(n) 31 nach Art eines Topfmagneten ausgeführt sind, der Antrieb also einen inneren Polkern und ein äußeres Polrohr aufweist, wobei der oder die Anker(21) beispielsweise becherförmig ausgestaltet ist, sodass sich am Anker eine Stirnfläche ergibt, die mit einer korrespondierenden Stirnfläche am Polkern die Ausbildung einer (Reluktanz-)Haltekraft ermöglicht; dabei müssen Polrohr und Polkern nicht auf gleicher Höhe abschließen sondern können zum Zwecke der Kennlinienbeeinflussung auf unterschiedlichen Höhen abschließen und auch veränderliche magnetische Querschnitte aufweisen.

29. Antrieb nach Aspekt 26 gekennzeichnet dadurch, dass der oder die Anker (21) einen weichmagnetischen Steg (R) aufweist bzw. aufweisen, über dessen Abmaße die Kennlinie des Antriebs beeinflusst werden kann, und der außerdem als Anschlag für den oder die Permanentmagnete (21) dienen kann; anstelle eines einfachen Steges kann der der die Anker (21) auch eine oder mehrere Nuten aufweisen, in welche die beispielsweise als Kreissegmente ausgebildeten Permanentmagnete eingelegt, und beispielsweise vergossen werden können

30. Antrieb nach einem oder mehreren der Aspekte 26 bis 29 gekennzeichnet dadurch, dass ein Kurzschluss des Permanentmagneten durch einen Luftspalt senkrecht zur Bewegungsrichtung des Ankers (21) ("radialer" Luftspalt), vermieden wird, wie er von herkömmlichen Anker-Ankergegenstücksystemen bekannt ist, sodass durch dessen geometrische Ausgestaltung die Kennlinie des Magneten beeinflusst wird

31. Antrieb nach Aspekt 30 gekennzeichnet dadurch, dass dieser radiale Luftspalt mit einem Werkstoff mit guten Gleitlagereigenschaften gefüllt wird.

32. Antrieb nach Aspekt 31 gekennzeichnet dadurch, dass der Luftspalt mit einem elektrisch gut leitenden (metallischen) Werkstoff gefüllt wird, um die Dynamik des Antriebs zu vermindern.

33. Antrieb nach einem oder mehreren der Aspekte 26-32, dadurch gekennzeichnet, dass er zwei mit Permanentmagneten (41, 42) bestückte Anker (21, 22) und zwei Induktionsspulen (31, 32) aufweist, wobei die Anker über eine Schubstange (71) starr miteinander verbunden sind.

34. Antrieb nach Aspekt 33 gekennzeichnet dadurch, dass er zwischen den Spulen einen (weich-)magnetischen Kurzschluss (K) aufweist, der so auszulegen ist, dass es bei der Nennleistung des Magneten im statischen Fall der weichmagnetische Werkstoff, der den Kurzschluss bildet, nicht magnetisch sättigt.

35. Antrieb nach Aspekt 33 und/oder 34 gekennzeichnet dadurch, dass die Spulen (31, 32) in Reihe geschaltet sind und gleichsinnig bestromt werden und dass außerdem die Permanentmagnete (41, 42) gleichsinnig polarisiert sind.

36. Antrieb nach einem oder mehreren der Aspekte 26 bis 35 gekennzeichnet dadurch, dass er zwei starr miteinander verbundene Anker aufweist und zusätzlich mit einem Federsystem ausgestattet ist, welches das Ankersystem aus jeder der beiden Hubendlagen in Richtung der Hubmittellage treibt.

37. Verriegelungseinheit, insbesondere Maschinenverriegelung, nach Aspekt 1

38. Verriegelungseinheit, insbesondere Maschinenverriegelung, nach einem oder mehreren der Aspekte 26 bis 36.

Die vorliegende Erfindung wird im folgenden Anhand von Figuren und Ausführungsbeispielen beschrieben.

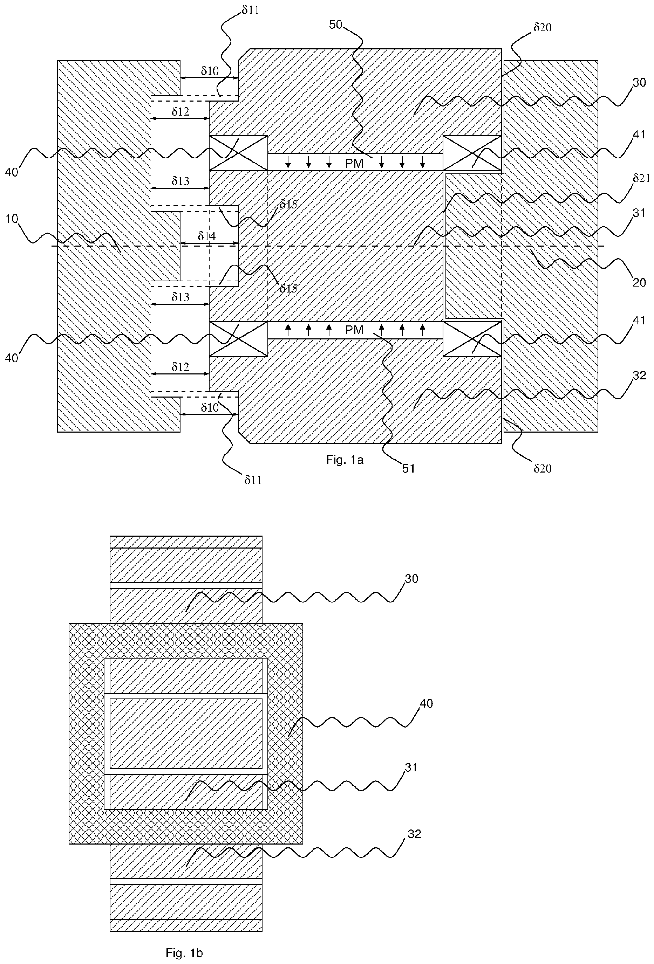

Fig. 1a zeigt eine Seitenansicht, Fig. 1b eine Frontalansicht eines nahezu maßstabgetreuen erfindungsgemäßen Antriebs in einer Ausführung mit zwei Ankern bzw. Ankerplatten (allgemein Ankerteile). Nicht dargestellt ist das Federsystem, da ein solches nach den Maßgaben aus den Ansprüchen für jeden Fachmann ohne weiteres konstruiert werden kann, gegebenenfalls in Abstimmung an eine bestimmte Anwendung. Ebenfalls nicht dargestellt ist die starre mechanische Verbindung beider Anker, die vom Fachmann mit dessen Routinekönnen entworfen werden kann, beispielsweise in Gestalt eines Gestänges.

Fig. 1a zeigt in Seitenansicht die Elektroblech-Pakete 30, 31 und 32, die den Rahmen des Magneten bilden. Dabei wird der innere Rahmenteil 31 durch die Permanentmagnete 50, 51 gegen die äußeren Rahmenteile 30, 32 magnetisch unter Spannung gesetzt. Der Magnet weist zwei Spulen 40, 41 auf, die beispielsweise in Reihe geschaltet oder getrennt bestromt werden können. Üblicherweise werden sie aber gleichsinnig bestromt. Der Magnet weist, wie erwähnt, zwei Anker(-platten) auf, nämlich 10 und 20. Anker 20 weist wegen der großen sich aus Spule 41 ergebenden radialen "Luftspalte" keine geometrische Kennlinienbeeinflussung in engerem Sinne auf - seine Ausformung dient der Maximierung der Reluktanzkraft, die Anker 20 über dessen Arbeitsluftspalte 520 und $\delta 21$ "mitgeteilt" wird.

Anker 10 und Rahmen sind hingegen zu einem Anker-Ankergegenstücksystem ausgebildet, welches den Ausnutzungsgrad des Magneten beim Anziehen von Anker 10 stark erhöht. Das Anker-Ankergegenstück-System aus Anker 10 und den Rahmenteilen 30, 31, 32 weist die Arbeitsluftspalte $\delta 10$, $\delta 12$, $\delta 13$, $\delta 14$ auf, welche infolge der Spiegelsymmetrie des Antriebs doppelt auftreten aber einheitlich benannt sind. Gleiches gilt für die radialen Luftspalte $\delta 11$ und $\delta 15$, welche ebenfalls Teil der geometrischen Kennlinienbeeinflussung sind. Wie in Fig. 1b zu sehen ist, weist der Antrieb eine Spule mit quadratischem Kern auf. Dies ist vorteilhaft, jedoch nicht erforderlich. Vorzugsweise werden die Anker 10 und 20 ebenfalls aus weichmagnetischen Blechpaketen aufgebaut. Da erfindungsgemäße Antriebe eine hohe Dynamik aufweisen können, bestehen vergleichsweise hohe Ansprüche an die Wirbelstromdämpfung, wie sie mit Hilfe üblicher Blechpakete realisiert werden kann. Die Verwendung von Blechpaketen wird vor allem für den Aufbau quaderförmiger Magnete (solche, deren Magnetkreise in erster Näherung nur zwei oder drei Spiegelebenen aufweisen) empfohlen. Die Magnetkreise kleinerer rotationssymmetrischer/zylindrischer erfindungsgemäßer Magnete können aus den üblichen weichmagnetischen Vollmaterialien aufgebaut werden (beispielsweise Reineisen, ferritische Stähle, Fe-Si-Legierungen, Legierungen auf Fe-Co-Basis). Zur zusätzlichen Dämpfung ist die fachmännische Einbringung von Schlitzen, insbesondere in den oder die Anker, hilfreich. Besonders kurze Totzeiten und geringste Wirbelstromverluste (im "Eisen") können mit Hilfe weichmagnetischer Kompositwerkstoffe (bspw. 3P Somaloy 1000, sogenannte SMC-Werkstoffe) erzielt werden. Diese SMC-Werkstoffe konnten vermittels Pulverspritzgießen auch in Bauteile mit komplexen dreidimensionalen Geometrien überführt werden. Dies ermöglicht beispielsweise auch bei rotationssymmetrischen Antrieben die Bildung von "Kammern", in denen Permanentmagnete untergebracht werden können. Die zwangsläufig die Kammern bildenden Stege ("Traversen") aus SMC-Werkstoff bilden bei solchen Konstruktionen zwar magnetische Kurzschlüsse, die aber so ausgelegt werden können, dass sie magnetisch sättigen und dabei hinreichend wenig Fluss führen. Ähnlich können Kammern zur Aufnahme von Permanentmagneten auch in Blechpaketen gebildet werden, indem einige Bleche durchgehend gestaltet sind, wo andere Aussparungen besitzen; hierdurch kann sich eine Wabenstruktur zur Aufnahme von Permanentmagneten ergeben, die auch mechanisch sehr robust, also steif ist.

Insbesondere bei rotationssymmetrischen, aber auch bei quaderförmigen erfindungsgemäßen Antrieben mit zwei Ankern bietet sich an, die starre Verbindung zwischen den Ankern durch eine zentral angeordnete Stange zu realisieren, die beispielsweise bei zylindrischen Magneten koaxial zur Zylinderachse verläuft. Wird diese mit den Ankern verbundene Stange von der/den Antriebsspule(n) umschlossen, so kann diese vorteilhaft selbst aus weichmagnetischem Material bestehen und der Flussführung dienen. Dieser zusätzliche Fluss muss natürlich bei der Dimensionierung der Polflächen entsprechend berücksichtigt werden.

Die schematische Darstellung aus Fig 1a und Fig. 1b ist derart maßstabsgetreu, dass sie für FEM-Simulationen als gute Grundlage dienen kann. Um daraus einen erfindungsgemäßen Antrieb abzubilden, sollte in der Simulation die Kennlinie des nicht abgebildeten erfindungsgemäßen Federsystems berücksichtigt werden. Das Optimieren des Antriebs durch Variieren von Federfunktion, Kupferfüllgrad, Windungszahlen etc. gehört zum Tagewerk des mit der FEM-Simulation elektrischer Antriebe betrauten Fachmanns.

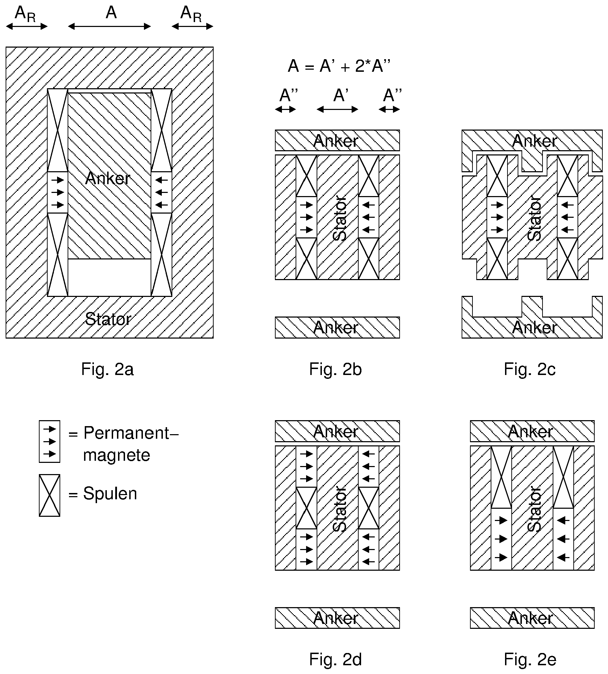

Die Figuren 2b, 2c, 2d, 2e zeigen schematisch unterschiedliche Antriebsbauweisen im Vergleich zu einem herkömmlichen Umkehrhubmagneten 2a, sogar unterschiedliche Topologien. Alle dargestellten Antriebe sollen als quaderförmig und ggf. aus Blechpaketen zusammengesetzt angenommen werden. Erfindungsgemäße Antriebe können natürlich in allen dargestellten Bauweisen und Kombinationen davon ausgeführt werden; der Vorteil bezüglich der Baugröße, den die Ausführungen mit zwei Ankern (2b-e) haben, ist offensichtlich, da die Polflächen über den Arbeitsluftspalten aller hier schematisch aber vergleichend-maßstäblich gezeigten Antriebe gleich groß sind. Antriebe mit zwei Ankern können also weitaus kompakter bauen als solche mit nur einem, vor allem, da die äußere Flussrückführung entfällt. Der Dynamik erfindungsgemäßer Magnete mit zwei Ankern kommt noch zugute, dass die Gesamt-Ankermasse aus zwei Gründen geringer sein kann als bei Magneten konventioneller Geometrie (wie in 2a): Erstens ermöglich die höhere Polteilung vergleichsweise dünne "Ankerplatten", zweitens nimmt die zu bewegende (Gesamt-)Ankermasse mit zunehmendem Nennhub des Magneten nicht in gleichem Maße zu, ebensowenig wie mit zunehmender Spulen- oder Permanentmagnet-Länge.

Ist zur Ausführung der Erfindung nur ein geringer Querschnitt erforderlich und die Baulänge eher unerheblich, so können anstelle zweier Anker und eines einzigen permanentmagnetisch polarisierten Stators auch zwei permanentmagnetisch polarisierte Statoren und ein einziger Anker verwendet werden. Derartige Ausführungen benötigen zwar ungefähr die doppelte Menge an Permanentmagnet-Werkstoff (pro wirksamer Polfläche) und bauen auch ungefähr doppelt so lang wie solche Antriebe mit zwei Ankern. Dafür können sie bei korrekter Auslegung, zumindest in kurzhubigen Ausführungen, infolge der geringeren Ankermasse eine besonders hohe Dynamik aufweisen. Zur weiteren Steigerung der Dynamik kommt neben elektrodynamischem Zusatzantrieb (vgl.bspw. WO 2011/003547 A1) auch eine Erhöhung der Polpaarzahl zur Reduzierung der Ankermasse in Betracht (die "Ankerplatte" kann dann dünner ausgelegt werden), in einem solchen Fall bestehen der oder die Rahmen aus mehr als zwei (rotationssymmetrische Bauweise) oder drei ("eckige" Bauweise) weichmagnetischen Teilen, die gegeneinander unter magnetische Spannung gesetzt werden.

Unterschiedliche weichmagnetische Teile sind keinesfalls so zu verstehen, dass diese physisch voneinander getrennt sein müssen. Sie können auch, wie oben beschrieben, durch ganz oder teilweise gesättigte Bereiche voneinander getrennt sein; maßgeblich ist allein, dass permanentmagnetisch zwischen diesen Teilen bzw. - genauer - Bereichen die erforderliche magnetische Spannung verursacht werden kann.

Alle Antriebe gemäß den Figuren 2a-e können natürlich auch rotationssymmetrisch aufgebaut werden. Jedenfalls sind erfindungsgemäße Antriebe mit zwei starr miteinander verbundenen Ankern besonders kompakt, verglichen mit herkömmlichen Umkehrhubmagneten können sie bezüglich des Bauvolumens oft um ein Mehrfaches kleiner ausgelegt werden, sofern der gleiche Permanentmagnet-Werkstoff verwendet wird. Wird auf diese Miniaturisierung verzichtet und ein erfindungsgemäßer Magnet mit zwei Ankerplatten ebenso groß gebaut wie ein konventioneller, so kann der gewonnene Bauraum genutzt werden, kostengünstige aber große Permanentmagnete geringer Energiedichte zu verwenden (bspw. Hartferrite) anstelle kleiner aber teurer Permanentmagnete hoher Energiedichte (insb. Selten-Erden-Magnete).

Im Folgenden wird ein weiteres Beispiel der Erfindung anhand eines monostabilen Umkehrhubmagneten erläutert. Monostabile Ausführungen der Erfindung werden erhalten, indem die auf den Anker bzw. das Ankersystem wirkende Reluktanzkraft im stationären, unbestromten Fall nur in der einen, nicht jedoch in der anderen Hubendlage größer ist als die zugehörige Federkraft. Feder und Magnet werden dabei so auf einander abgestimmt, dass die Summe aus Federkraft und Reluktanzkraft im stationären, unbestromten Fall ("stationäre Gesamtkraft") an jedem Punkt des Stellweges das gleiche Vorzeichen aufweist. Im unbestromten Fall ist der Antrieb also nur dann stabil, wenn der Anker (bzw. das Ankersystem) sich in seiner einen stabilen Hubendlage befindet. Betragsmäßig muss die stationäre Gesamtkraft (aus magnetischer- und Federkraft) größer sein als die auf das System möglicherweise wirkende Reibung; gegebenenfalls muss die zugehörige stationäre Gesamtkraft-Kennlinie bezüglich möglicher Rückstellkräfte auf die jeweilige Anwendung abgestimmt sein (bspw. der pneumatische Druck, wenn der monostabile Antrieb ein Pneumatikventil, wie es beispielsweise in Automatik-Getrieben verwendet wird, überwinden soll).

In der instabilen Endlage darf im stationären, unbestromten Fall die Reluktanzkraft nicht durch magnetische Sättigung begrenzt werden. Das heißt, in demjenigen magnetischen Teilkreis, der die am Stator anliegende(n) Haftfläche(n) des Ankers einschließt, soll keinesfalls und in keinem Bereich über den gesamten wirksamen Eisenquerschnitt magnetische Sättigung auftreten. Auf diese Weise kann durch Bestromen der Spule(n) die Reluktanzkraft in der unbestromt instabilen Hubendlage soweit erhöht werden, dass der Magnet entgegen der Federkraft auch in dieser ("zweiten") Hubendlage (meta-)stabil ist, solange die hierzu erforderliche elektrische Leistung aufgewendet wird. Hier sollte der Magnet dahingehend bemessen sein, dass mit möglichst geringer elektrischer Leistung eine möglichst große Erhöhung der Reluktanzkraft in der "instabilen" ("zweiten") Hubendlage erreicht wird - dies ist auch wichtig, um den Magneten mit hohen Einschaltdauern in der instabilen Endlage halten zu können. Was das Federsystem betrifft, so muss dieses nicht linear sein. Vorzugsweise hat es eine progressive Charakteristik bezüglich der stabilen Hubendlage, das heißt, die das Ankersystem in Richtung der Hubmittellage treibende Federkraft nimmt stärker als linear zu, wenn das Ankersystem sich der stabilen ("ersten") Hubendlage nähert. Dies ist auch durch Kombination mehrerer linearer Federn zu erreichen.

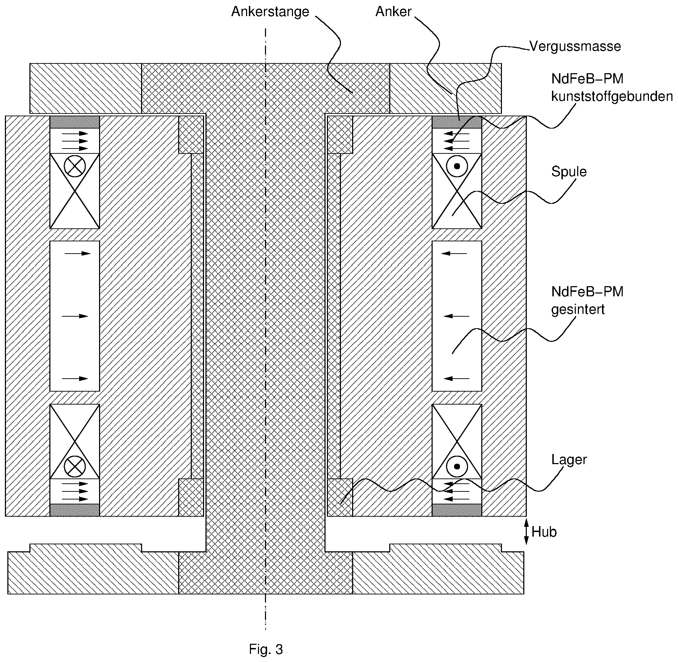

Das magnetische Prinzip wird anhand von Fig. 3 veranschaulicht. Der im Bild untere Anker weist bezüglich des Stators einen größeren Eisenquerschnitt auf als der im Bild obere Anker. Der von den Permanentmagneten erzeugte magnetische Fluss wird somit beim anliegenden unteren Anker über einen größeren Querschnitt verteilt als beim oberen Anker. Zusätzlich ist die Oberfläche des unteren Ankers bzw. der unteren Ankerplatte strukturiert. Wenn die anliegenden Bereiche bereits sättigen, ergibt sich ein nahezu parallel verlaufender magnetischer Fluss vom nicht-gesättigten Stator-Eisen ins nichtgesättigte Anker-Eisen (der Begriff Eisen wird hier synonym mit "weichmagnetischem Werkstoff" gebraucht). Dieser parallel verlaufende Fluss weist Flussdichten auf, die kleiner sind als die Sättigungsflussdichte des verwendeten Eisenwerkstoffs (bei Verwendung unterschiedlicher Eisenwerkstoffe kleiner als die Sättigungsflussdichte des Werkstoffs mit der geringeren Sättigungsflussdichte). Verstärken dieses Flusses durch Bestromen der Spule führt zur benötigten Zunahme der Reluktanzkraft. Der Antrieb gemäß Fig.3 ist weitgehend maßstabgetreu und kann als Grundlage für FEM-Simulationen verwendet werden. Für die Ausführung der Erfindung als monostabilen Umkehrhubmagneten mit zwei starr verbundenen Ankern müssen diese Anker(-platten) allerdings nicht unterschiedlich geformt sein: Es könnte das Magnetsystem auch so ausgelegt werden, dass die erfindungsgemäß zu vermeidende Sättigung im stromlosen Fall in *keiner* Position zustande kommt - dies gelingt allerdings nur zulasten der Reluktanzkraft in der "stabilen" Position. In einer anderen Ausführung wird die oben beschriebene, erwünschte "magnetische" Asymmetrie dadurch erreicht, dass bei baugleichen Ankerplatten für jede Ankerplatte unterschiedlich dicke Antiklebscheiben verwendet werden bzw. nur eine Antiklebscheibe vorgesehen ist, während eine Ankerplatte direkt am Stator anliegen kann. Fig.3 zeigt ein schematisches zweidimensionales Modell eines erfindungsgemäßen monostabilen Antriebs (ohne, dass das Federsystem eingezeichnet wäre), wobei durch die magnetischen Kurzschlüsse die bereits angesprochenen Traversen nachgebildet werden. Modelliert wird so z.B. ein Magnet, bei dem die gesinterten Permanentmagnete in Form radial oder diametral polarisierter Kreissegmente um den Umfang des inneren Statorbereichs angeordnet sind. Innerer und äußerer Statorteil bzw. -bereich sind durch die angesprochenen Traversen miteinander verbunden, welche radial zwischen den einzelnen Kreissegmenten verlaufen. Auf diese Weise kann der gesamte Stator aus einem einzigen, maschinenfallenden (v.a. SMC)-Teil bestehen, das Kammern aufweist, die durch die Traversen voneinander getrennt sind, und in die die gesinterten PM eingelegt werden können. Die in Fig.3 gezeigten kunststoffgebundenen Permanentmagnete sind ebenfalls radial oder diametral polarisiert. Sie sind nicht unbedingt erforderlich, helfen aber, Streuverluste zu kompensieren. Diese Kompensation von Streuverlusten kann auch auf einer einzigen Seite des Antriebs mit einem einzigen Permanentmagnet-Ring erfolgen; dies ist am besten der Fall auf derjenigen Seite, die der stabilen Hubendlage entspricht, da hier eine möglichst hohe permanentmagnetische Haltekraft erzeugt werden soll, die nicht durch Bestromen der Spule weiter gesteigert werden muss. Als Federsystem können Formfedern verwendet werden, welche von "außen" auf die Ankerplatten wirken (und die mechanisch ggf. über ein Gehäuse mit dem Stator verbunden sind). Die Feder(n) können aber auch um die zentrale (Antriebs-)Achse oder auf andere Weise konstruiert werden.

Ein gänzlich anderes (hier: rotationssymmetrisches) Ausführungsbeispiel eines erfindungsgemäßen Antriebs ist in Fig. 4 dargestellt, das Federsystem wird wiederum nicht gezeigt. Der Magnet in Fig. 4 weist einen Stator 11 auf, zwei Anker 21, 22, zwei Spulen 31, 32 sowie eine Schubstange 71, welche die beiden Anker starr verbindet. (Anm: Bei Antrieben gem. Fig. 4 ist es allgemein von Vorteil, die Spulen 31, 32 gleichsinnig in Reihe zu schalten). Infolge des magnetischen Kurzschlusses K kann sich der Magnet wie ein Doppelhubmagnet verhalten, bestehend aus zwei einzelnen Rücken-an-Rücken montierten Magneten, welche dieselbe Antriebsachse teilen. Wesentlich für diese Ausführung der Erfindung ist die Befestigung der Permanentmagnete am Anker. Beim Eintauchen eines Ankers in Stator 11 wird dieser Anker gegenüber Stator 11 mit Hilfe der Permanentmagnete unter eine magnetische Spannung gesetzt. Bestromen der zugehörigen Spule führt je nach Stromrichtung zu einer attraktiven oder repulsiven Kraft auf den Permanentmagneten, welche dieser auf den Anker überträgt. Dies erhöht den Gestaltungsspielraum des Magneten stark, da in reinen Reluktanzmagneten keine repulsiven Wechselwirkungen auftreten, jedenfalls nicht auf den weichmagnetischen Anker. Im Grunde entspricht der Magnet bis dahin weitgehend einem Tauchspulenantrieb, bei dem Permanentmagnet und Erregerspule vertauschte Rollen einnehmen. In Abweichung davon weist der Magnet aber zusätzliche (radiale) "Luftspalte" auf, ohne die nicht wie beschrieben die Anker unter (nennenswerter) magnetischer Spannung gegenüber dem Stator stehen könnten. Jedenfalls sind die Anker nicht zu *großflächig* magnetisch leitend mit dem Stator 11 verbunden. Die gegenständlichen radialen Luftspalte sind hier beispielsweise mit einem Gleitlagerwerkstoff 51, 52 aufgefüllt (die auch als Notlauflager dienen können, im dargestellten Modell ist Raum für Gleitlager an der Antriebsachse vorgesehen). Diese erforderlichen radialen Luftspalte können wie in Fig. 4 ausgestaltet sein, die Kennlinie(n) des Antriebs entsprechend der jeweiligen Anwendung zu beeinflussen. Beispielsweise kann Stufe **S** der Erzeugung einer besonders hohen Kraftanstiegsrate im Bereich der Hubmittellage dienen, auch im unbestromten Fall - insbesondere bei Ausführungen ohne Federsystem ist dies unter Umständen erforderlich, um ein Stehenbleiben des Ankers in einer undefinierten Position zu verhindern. Ohne zusätzlichen Luftspalt wäre bei längeren Hüben kein Teil des Magneten in der Lage, eine Haltekraft zu erzeugen, da jeder Anker seinen Permanentmagneten bei zu tiefem Eintauchen in den Stator magnetisch kurzschließen würde.

Die Permanentmagnete können beispielsweise als diametral oder radial polarisierte Kreissegmente ausgebildet sein. Ein bistabiler Antrieb kann auch mit nur einem der beiden quasi Rücken-an-Rücken montierten Magnete, also einer "Antriebshälfte", erhalten werden, und zwar, indem der andere durch eine dementsprechend zu bemessende Feder bzw. ein Federsystem ersetzt wird. Solche Antriebe müssen auch nicht rotationssymmetrisch aufgebaut sein. Nicht-rotationssymmetrische Varianten können außerdem mit einer transversalen Flussführung realisiert werden, um besonders langhubige Antriebe darzustellen. Vorteil von Antrieben gemäß Fig.4 ist, dass sie bei Verwendung von Permanentmagneten hoher Energiedichte bemerkenswert hohe Kraftkonstanten bei vergleichsweise langen Hüben aufweisen können. Die Antriebe sind sehr vielseitig. Die Kombination mit einem Federsystem, welches das Ankersystem aus jeder der beiden Hubendlagen in Richtung der Hubmittellage treibt, ermöglicht sehr schnelle Antriebe mit hohem Wirkungsgrad, hohen Kraftkonstanten, daher hohen Hubarbeiten, und dennoch geringem Verschleiß, da die Ankergeschwindigkeit vor Erreichen der Hubendlage durch das Federsystem erheblich vermindert wird. Wird dagegen auf ein Federsystem verzichtet und als "Notlauflager" 51, 52 ein elektrisch gut leitendes Metall verwendet, so wirken die Notlauflager zugleich als Wirbelstrombremsen und ermöglichen langsame Ankerbewegungen, bei denen die volle stationäre Kraft bei gegebenem Strom nur aufgebaut wird, sobald der Anker bspw. durch Reibung oder die Last *festgehalten* wird. Während des Stellvorganges stellt sich quasi ein dynamisches Gleichgewicht zwischen Antriebskraft und Wirbelstrombremse ein. Die "Wirbelstrombremsen" (hier als Notlauflager ausgebildet), die auch an dem oder den Ankern anstatt am Stator befestigt sein können, dämpfen auch Prellvorgänge. Die an den Ankern befestigten Permanentmagneten (PM) stellen auch eine eine Art magnetisches Federsystem dar.

Für hochdynamische Antriebe mit insbesondere mechanischen Federn bietet sich an, rotationssymmetrische Ausführungen des Magneten, oder zumindest solche mit rotationssymmetrischem Innenpol, aus SMC-Werkstoffen aufzubauen. Spanend bearbeitete Teile aus Vollmaterial sind besser für die langsamere "federlose" Ausführung geeignet (also solche ohne mechanische oder pneumatische Federn), vor allem bei Verwendung der beschriebenen Wirbelstrombremsen. Der magnetische Rückschluss **R** ermöglicht einerseits eine leichte Montage der Permanentmagnete, denen er auch als Anschlag dient, beeinflusst aber gleichsam die Kennlinie stark und erhöht vor allem die Kraft zum Hubbeginn.

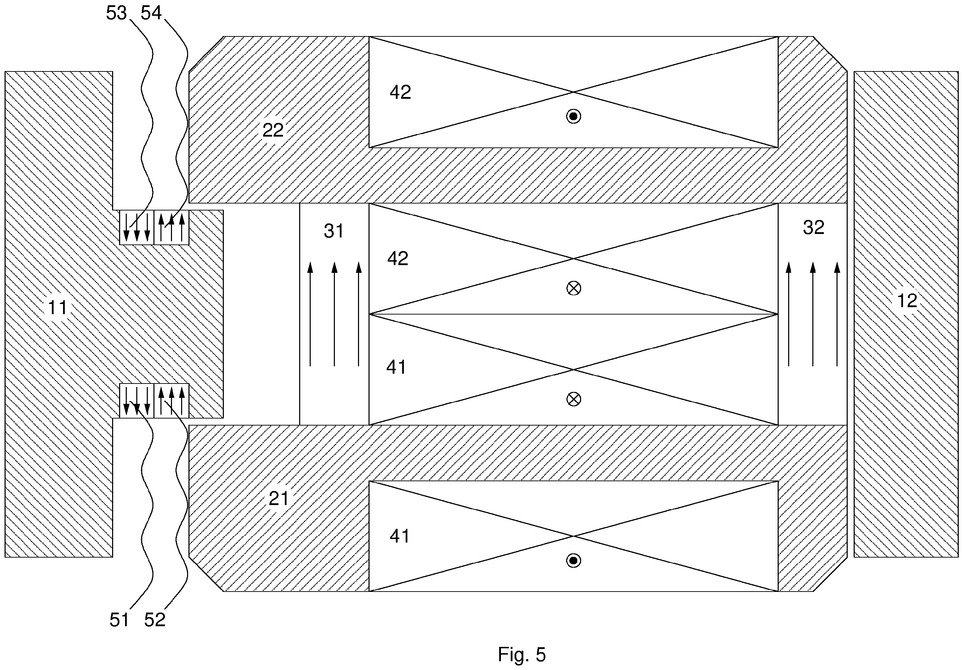

Der Magnetkreis eines weiteren Ausführungsbeispiels der Erfindung wird in Fig. 5 schematisch dargestellt. Nicht eingezeichnet ist das Federsystem. Vorzugsweise werden hier eine oder mehrere mechanische Federn verwendet. Die Zeichnung ist nicht maßstabsgetreu. Ankerteile 11 und 12 sind als vorzugsweise aus Blechpaketen gebildete Ankerplatten zu verstehen, die wiederum eine nicht eingezeichnete, möglichst starre mechanische Verbindung aufweisen. 21 und 22 sind vorzugsweise aus Blechpaketen gebildete Statorteile, die von den Permanentmagneten 31 und 32 gegeneinander unter eine magnetische Spannung gesetzt werden. Der Antrieb wird durch Bestromen der Spulen 41, 42 betrieben, wobei als Leistungsversorgung ein Kondensator oder eine Kondensatorbank dienen kann oder auch eine SPS - letztere bietet den Vorteil, den Antrieb während der Stellbewegung steuern bzw. den Bewegungsablauf beispielsweise last- oder wegabhängig regeln zu können. Zur weiteren Effizienzsteigerung kann eine Freilaufeinrichtung verwendet werden (z.B. entsprechend geschaltete auf MOSFETS basierende Wechselstromschalter, die bei getrennter Leistungsversorgung einen Freilauf des Stroms in den Spulen ermöglichen). Fig. 5 ähnelt vom Aufbau her Fig.1, besitzt aber neben anderen konstruktiven Unterschieden vor allem ein besonderes Merkmal: Zur Beeinflussung der Kennlinie sind an (zumindest) einer Ankerplatte zusätzliche Permanentmagnete 51, 52, 53, 54 befestigt. Die Permanentmagnete 51, 52, 53, 54 sollten mechanisch robust sein, eine hohe Koerzitivität sowie eine möglichst geringe spezifische oder effektive Leitfähigkeit aufweisen; besonders geeignet sind kunststoffgebundene NdFeB-Magnete oder segmentierte, gesinterte NdFeB-Magnete. Die auf die Permanentmagnete wirkende magnetische Kraft kann als auf deren "Oberflächenströme" wirkende Lorentzkraft interpretiert werden. Beim Eintauchen in den Stator während einer Stellbewegung aus der in Fig. 5 gezeigten Hubanfangslage spüren die Magnete 52, 54 (die bezüglich des Stators aus 21, 22 die gleiche Polarisationsrichtung aufweisen wie die Magnete 31,32) zunächst eine der Hubbewegung entgegengerichtete Kraft, welche die "Kraftkonstante" des Antriebs im Bereich des Hubanfangs zwar mindert, aber auch "Flussverluste" über den in den Stator eintauchenden Teil von Ankerplatte 11 kompensiert. Im Gegenzug kann eine sehr hohe "Kraftkonstante" auftreten, wenn bei fortschreitender Hubbewegung auch die Magnete 51, 53 in den Stator einzutauchen beginnen, die entgegengesetzt polarisiert sind wie die Magnete 52, 54. Mit Hinblick auf den Wirkungsgrad der Anordnung ist von Vorteil, dieses Eintauchen der Magnete 51, 53 so mit dem Federsystem abzustimmen, dass es erst stattfindet, wenn das Federsystem infolge der Hubbewegung bereits weitgehend entspannt ist und das Ankersystem einen Großteil seiner Maximalgeschwindigkeit bereits erreicht hat. Um die während der Hubbewegung beispielsweise im Bereich der Hubmittellage auftretende hohe Geschwindigkeit auf die beschriebene Weise zur Erhöhung des Wirkungsgrades gründlich zu nutzen (Abstimmung der Kraftkonstante des Antriebs mit der Ankergeschwindigkeit entlang eines Hubes, hier nicht durch rein geometrische Kennlinienbeeinflussung sondern durch geeignet angeordnete, an mindestens einer Ankerplatte befestigte Permanentmagnete) ist die Wirbelstromdämpfung auch in den Permanentmagneten sehr wichtig und, wie bereits erwähnt, durch Werkstoffauswahl und konstruktive Maßnahmen möglichst wirksam zu gestalten. Aus Fig.1 und Fig.5 abgeleitete Antriebe sind unter anderem als Ersatz für pneumatische oder hydraulische Ziehbackensteuerungen in Ziehmaschinen sehr geeignet.

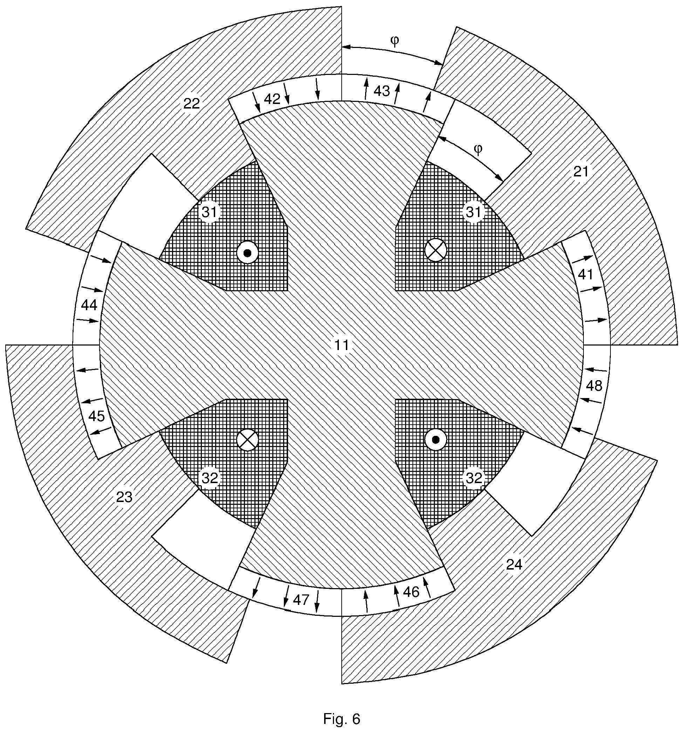

Alle bisher aufgeführten Ausführungen der Erfindung waren Linearantriebe mit begrenztem Hub. Es sind aber auch Ausführungen als Drehmagnete möglich, welche eine begrenzte rotatorische Bewegung erzeugen. In diesem Fall bezieht sich der Begriff "Hub" auf eine rotatorische Bewegung über einen bestimmten Winkelbereich. Antriebe, welche außerordentlich kurze Stellzeiten und hohe Betriebsfrequenzen bei gleichzeitig hohem Wirkungsgrad erreichen, können leicht anhand des schematisch in Fig. 6 dargestellten Antriebs entworfen werden. Fig.6 zeigt den Antrieb im Querschnitt. Der Antrieb kann als permanent erregter Außenläufermotor aufgefasst werden: Der Außenläufer wird aus den weichmagnetischen Teilen 21, 22, 23, 24 gebildet, welche miteinander mechanisch verbunden sind (Verbindung ist nicht dargestellt) und die um Stator 11 angeordnet sind. Der Außenläufer ist um die Längsachse des Stators drehbar gelagert und kann mit einem Federsystem ausgestattet werden (nicht abgebildet). Die Außenläuferteile 21, 22, 23, 24 weisen offensichtlich nach innen (also zum Stator hin) gerichtete Zinken auf, welche in beiden Hubendlagen am Stator zu liegen kommen können. Selbst, wenn konstruktiv keine gesonderten Anschläge vorgesehen sind, ist die Bewegung $\varphi$ des Antriebs um seine Drehachse durch die Zinken begrenzt (im Gegensatz zu bekannten Außenläufermotoren). Gegenüber dem Stator werden die weichmagnetischen Teile des Außenläufers durch Permanentmagnete 41-48 unter magnetische Spannungen gesetzt, wobei das Vorzeichen der magnetischen Spannung um den Umfang des Außenläufers alterniert. Zur Veranschaulichung sind die Polarisationsrichtungen der Permanentmagnete als Pfeile eingezeichnet. Im Beispiel sind die Permanentmagnete am Stator befestigt. Sie können aber auch Teil des Außenläufers sein. Überhaupt ist Fig.6 als allgemeine Veranschaulichung des Prinzips zu verstehen und soll keine Einschränkung darstellen. Vorzugsweise werden die weichmagnetischen Teile 21, 22, 23, 24 des Außenläufers sowie der Stator aus (Elektro-)Blechpaketen oder weichmagnetischen Kompositwerkstoffen hergestellt. Ferner weist der Antrieb aus Fig.6 eine oder mehrere Spulen auf. Ein Beispiel für die möglichen Wickelsinne ist symbolisch eingezeichnet (Kreuz und Punkt im Kreis). In Fig.6 sind zwei Spulen eingezeichnet, nämlich 31 und 32. Es kann der Stator 11 aber auch direkt bewickelt werden, wie dies von Elektromotoren bekannt ist. Wie erläutert, weist der Antrieb bei Drehung des Außenläufers um seine Längsachse zwei Endlagen auf, in denen die Zinken der Außenläuferteile 21, 22, 23, 24 am Stator 11 zu liegen kommen. Da hierbei die zugehörigen (Arbeits-) Luftspalte zwischen den Außenläuferteilen und dem Stator bis auf konstruktiv bedingte Restluftspalte verschwinden, kann mit Hilfe der Permanentmagnete 41-48 ein sehr hohes Haltemoment erzeugt werden (die in Fig.6 dargestellte Anordnung der Permanentmagnete dient im Weiteren auch als Beispiel für eine Kennlinienbeeinflussung bei einer rotatorischen Ausführung der Erfindung). Erfindungsgemäß besitzt der Antrieb eine torsionsweiche Feder, welche ihn aus beiden Hubendlagen in Richtung der Hubmittellage treibt. Zu diesem Zweck ist eine einfache Torsionsfeder geeignet aber auch Anordnungen von Schraubenfedern, wie sie von Zweimassen-Schwungscheiben aus dem Automobilbau allgemein bekannt sind. Die Feder bzw. das Federsystem erzeugt in jeder der beiden Hubendlagen ein Drehmoment, welches betragsmäßig kleiner ist als das zugehörige Haltemoment des Antriebs (also dessen Reluktanzmoment im stationären, unbestromten Fall) und das außerdem ein entgegengesetztes Vorzeichen hat. Eine Gegenerregung durch die Spule(n) 31, 32 kann nun das Haltemoment des Magneten vermindern (bis hin zu einem Vorzeichenwechsel). Da wie gesagt das Haltemoment bauartbedingt sehr groß sein kann und das Drehmoment der Feder (oder des Federsystems) betragsmäßig ähnlich groß sein kann (mit einem gewissen Sicherheitsabstand, damit der Antrieb sich nicht bspw. durch Erschütterungen versehentlich in Bewegung setzt), ergibt sich in Summa ein enorm hohes Anlaufmoment, welches eine außerordentlich hohe Antriebsdynamik ermöglicht. Voraussetzung hierfür ist eine wirksame Wirbelstromdämpfung und eine angemessen geringe Induktivität der Spule(n) 31, 32. Bezüglich der Wirbelströme sollten die Permanentmagnete möglichst mit berücksichtigt werden. Soll der Antrieb auch unbelastet oder mit geringer Last betrieben eine sehr hohe Dynamik aufweisen (gemessen an der Last), so ist das Trägheitsmoment des gesamten Außenläufers möglichst konstruktiv zu minimieren.

Ein Antrieb nach Fig. 6 kann bei einem Durchmesser von 50mm, einem Drehwinkel von 20° und einer Gesamtlänge von 70mm ohne weiteres ein Anlaufmoment von 10 bis 20 Nm erreichen (und übertreffen), wie in einfachster Abschätzung mit Hilfe der Maxwellschen Zugkraftformel errechnet werden kann. Antriebe nach dem in Fig. 6 dargestellten Prinzip sind, mit einem entsprechenden Federsystem ausgestattet (dessen bewegte Masse gleichfalls möglichst gering zu halten ist), hervorragend als Sortiermagnete geeignet, insbesondere als Postsortiermagnete. In dieser Anwendung werden bereits Drehmagnete bevorzugt. Im Vergleich zum Stand der Technik sind mit den beschriebenen, neuartigen Drehmagneten jedoch um ein bis zwei Zehnerpotenzen (!) höhere Anlaufmomente zugänglich bei vergleichbarer oder sogar geringerer Leistungsaufnahme und insgesamt weitaus höherem Wirkungsgrad. Der hohe Wirkungsgrad ist gerade in hochfrequenten Sortieranwendungen elementar.

Einige wichtige Aspekte der Erfindung werden im Folgenden zusammengefasst, wobei diese Zusammenfassung keine abschließende Aufzählung darstellt. Erfindungsgemäß wird die oben genannte Aufgabe dadurch gelöst, dass der Umkehrhubmagnet ein Federsystem aufweist, welches auf den Anker in beiden Hubendlagen eine in Bewegungsrichtung zur Hubmittellage hin gerichtete Kraft ausübt. Dabei ist das Federsystem so auszulegen, dass in mindestens einer Hubendlage die Federkraft betragsmäßig kleiner ist als die auf den Anker wirkende Gesamt-Reluktanzkraft im statischen, unbestromten Fall, sodass der Anker entgegen der Federkraft permanentmagnetisch in mindestens einer Endlage stabil gehalten werden kann. Für bistabile Magnete ist das Federsystem möglichst so auszugestalten, dass die im Federsystem gespeicherte potentielle Energie in beiden Hubendlagen gleich groß ist und die Federkraft in beiden Hubendlagen betragsmäßig kleiner ist als die zugehörige Reluktanzkraft im stationären, unbestromten Fall. Sofern die Anwendung, welche vom Umkehrhubmagneten gestellt werden soll, selbst eine Rückstellkraft erzeugt, so ist diese bei der Auslegung des Federsystems entsprechend zu berücksichtigen. Erfindungsgemäße Antriebe können, falls ihre Hübe derartig groß sind, dass die zugehörigen Arbeitsluftspalte nicht in jedem regelmäßigen Betriebszustand als "klein" genähert werden können, Mittel zur Kennlinienbeeinflussung aufweisen. Diese sind erfindungsgemäß mit dem Federsystem abzustimmen. Die erfindungsgemäße Kennlinienbeeinflussung kann im Fall geometrischer Kennlinienbeeinflussung auch die Reihenreluktanz der Arbeitsluftspalte vermindern und damit helfen, die erforderlichen Auslöseleistungen zu minimieren.

Soll der erfindungsgemäße Antrieb eine besonders kompakte Bauform aufweisen, so umfasst dieser zwei oder mehr Rahmenteile aus weichmagnetischem Material, zwischen denen permanentmagnetisch eine magnetische Spannung erzeugt wird. Weiterhin umfasst der Antrieb mindestens zwei starr miteinander verbundene weichmagnetische Ankerplatten, nämlich die erste und die zweite Ankerplatte. Erfindungsgemäß weist der Antrieb zwei Hubendlagen auf, nämlich eine erste und eine zweite Hubendlage. Der Antrieb ist so ausgestaltet, dass in einer ersten Hubendlage die erste Ankerplatte die Rahmenteile, bis auf unvermeidliche Restluftspalte, magnetisch kurzschließt, währenddessen die Arbeitsluftspalte an der zweiten Ankerplatte maximal geöffnet sind. In einer zweiten Hubendlage schließt entsprechend die zweite Ankerplatte die Rahmenteile magnetisch kurz und die Arbeitsluftspalte an der ersten Ankerplatte sind maximal geöffnet. Ein zwangsweises Verschieben der starr miteinander verbundenen Ankerplatten von der ersten Hubendlage in die zweite führt demgemäß dazu, dass der permanentmagnetisch erzeugte Fluss überwiegend von der ersten auf die zweite Ankerplatte kommutiert. (Die Arbeitsluftspalte beider Ankerplatten (zum Rahmen) sind bezüglich des mit Hilfe der Antriebsspule(n) erzeugten magnetischen Flusses miteinander magnetisch in Reihe geschaltet. Bezogen auf den permanentmagnetisch erzeugten Fluss sind die genannten Arbeitsluftspalte magnetisch parallel geschaltet, d.h. Die Arbeitsluftspalte der ersten Ankerplatte sind bezüglich des Permanentmagneten parallel geschaltet zu denen der zweiten Ankerplatte).

## Patentansprüche

1.  Antrieb mit permanentmagnetisch polarisiertem Umkehrhubmagnet, der eine erste und eine zweite Hubendlage aufweist, eine zwischen den Hubendlagen liegende Hubmittellage sowie mindestens einen Anker, **dadurch gekennzeichnet, dass** der Antrieb ein Federsystem aufweist oder an einem solchen betrieben wird, welches in jeder der beiden Hubendlagen auf den oder die Anker eine Kraft in Richtung der Hubmittellage ausübt, wobei Federsystem und Umkehrhubmagnet so auf einander abgestimmt sind, dass der oder die Anker in beiden Hubendlagen entgegen der Federkraft permanentmagnetisch gehalten werden können.

2.  Antrieb gemäß Anspruch 1, bei dem das Federsystem so ausgestaltet ist, dass die darin durch Bewegen des oder der Anker in seine/ihre Hubendlagen elastisch gespeicherte potentielle Energie in beiden Hubendlagen unter Berücksichtigung äußerer, von außen auf das Federsystem wirkenden Rückstellkräfte möglichst gleich groß ist.

3.  Antrieb gemäß Anspruch 1, **gekennzeichnet dadurch, dass** er einen großen (Nenn-)Hub aufweist, also die Länge der voll geöffneten Arbeitsluftspalte nicht wesentlich kleiner ist als deren kleinste Ausdehnung senkrecht zur Luftspaltlänge, und dass der Antrieb eine (konstruktive) geometrische Kennlinienbeeinflussung aufweist, wobei die geometrische Kennlinienbeeinflussung so zu bemessen ist, dass die magnetische Haltekraft in den Hubendlagen nicht verschwindet sondern wenigstens ein Drittel derjenigen Haltekraft beträgt, die ein ansonsten identischer bistabiler Umkehrhubmagnet ohne Kennlinienbeeinflussung erreichen würde, wobei die geometrische Kennlinienbeeinflussung vorzugsweise so ausgelegt ist, dass an Nullstellen der Federfunktion des Federsystems bei auslegungsgemäßer Bestromung der Antriebsspule(n) eine Reluktanzkraft erzeugt wird, welche um wenigstens 50% größer ist als die bei einem ansonsten identischen Magneten, auch mit gleicher Bestromung, aber ohne Kennlinienbeeinflussung.

4.  Antrieb gemäß Anspruch 1, bei welchem der mindestens eine Anker mit dem Rahmen ein Anker-Ankergegenstücksystem zur geometrischen Kennlinienbeeinflussung bilden.

5.  Antrieb gemäß einem der Ansprüche 1 bis 4, **dadurch gekennzeichnet, dass** die Rahmenteile von Blechpaketen oder aus SMC gebildet werden.

6.  Antrieb gemäß einem der Ansprüche 1 bis 5, **dadurch gekennzeichnet, dass** der mindestens eine Anker aus massivem weichmagnetischen Werkstoff besteht, wobei in den mindestens einen Anker Schlitze zur Dämpfung der Wirbelströme eingebracht sind.

**7.** Antrieb gemäß Anspruch 6, **dadurch gekennzeichnet, dass** der mindestens eine Anker einen mindestens doppelt so hohen spezifischen elektrischen Widerstand aufweist wie reines ferritisches Eisen.

**8.** Antrieb gemäß einem oder mehreren der Ansprüche 1 bis 7 **gekennzeichnet dadurch, dass** das Federsystem innerhalb des Rahmens angeordnet ist.

**9.** Nieder- oder Mittelspannungsschalter, insbesondere Vakuumleistungsschalter, der von einem Antrieb gemäß einem der Ansprüche 1 bis 8 angetrieben wird.

Fig. 1a

Fig. 1b

Fig. 2a

$$A = A' + 2*A''$$

Fig. 2b

Fig. 2c

= Permanent–
magnete

= Spulen

Fig. 2d

Fig. 2e

Ankerstange   Anker

Vergussmasse

NdFeB-PM
kunststoffgebunden

Spule

NdFeB-PM
gesintert

Lager

Hub

Fig. 3

19

Fig. 4

Fig. 5

Fig. 6

Europäisches
Patentamt

European
Patent Office

Office européen
des brevets

# EUROPÄISCHER RECHERCHENBERICHT

**Nummer der Anmeldung**

**EP 21 19 8085**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/231050 A1 (LEWIS DONALD J [US] ET AL) 19. Oktober 2006 (2006-10-19) * Zusammenfassung; Abbildung 2 * * Absatz [0022] – Absatz [0023] * ----- | 1-3 | INV. H01F7/122 H01F7/16 H01H33/666 |
| X | US 4 829 947 A (LEQUESNE BRUNO P B [US]) 16. Mai 1989 (1989-05-16) | 1,2,4,6,8 | |
| Y | * Zusammenfassung; Abbildung 1 * * Spalte 4, Zeile 1 – Spalte 5, Zeile 37 * ----- | 5,7 | |
| X | CN 2 457 721 Y (GUO DAXIAN [CN]) 31. Oktober 2001 (2001-10-31) * das ganze Dokument * ----- | 1,2,4,8,9 | |
| Y | DE 43 04 921 C1 (E I B S A [BE]) 25. August 1994 (1994-08-25) * Zusammenfassung; Abbildung 1 * * Spalte 2, Zeile 63 – Spalte 3, Zeile 1 * ----- | 5,7 | |

**RECHERCHIERTE SACHGEBIETE (IPC)**

H01F
H01H

Der vorliegende Recherchenbericht wurde für alle Patentansprüche erstellt

| Recherchenort | Abschlußdatum der Recherche | Prüfer |
|---|---|---|
| **München** | **15. Dezember 2021** | **Tano, Valeria** |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
　　Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 19 8085

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2021

| Im Recherchenbericht angeführtes Patentdokument | Datum der Veröffentlichung | Mitglied(er) der Patentfamilie | Datum der Veröffentlichung |
|---|---|---|---|
| US 2006231050 A1 | 19-10-2006 | KEINE | |
| US 4829947 A | 16-05-1989 | KEINE | |
| CN 2457721 Y | 31-10-2001 | KEINE | |
| DE 4304921 C1 | 25-08-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011003547 A1